## Europäisches Patentamt

## European Patent Office

## Office européen des brevets

(19)

(11) Numéro de publication: **0 285 954 B1**

# FASCICULE DE BREVET EUROPEEN

(12)

(45) Date de publication de fascicule du brevet: **20.05.92** (51) Int. Cl.⁵: **H04L 25/04**

(21) Numéro de dépôt: **88104982.9**

(22) Date de dépôt: **28.03.88**

(54) **Egaliseur automatique pour transmission numerique.**

(30) Priorité: **31.03.87 FR 8704477**

(43) Date de publication de la demande:
**12.10.88 Bulletin 88/41**

(45) Mention de la délivrance du brevet:
**20.05.92 Bulletin 92/21**

(84) Etats contractants désignés:
**BE DE FR GB IT NL SE**

(56) Documents cités:
**DE-A- 2 043 144**
**US-A- 4 488 126**

**PATENT ABSTRACTS OF JAPAN, vol. 10, no.
27 (E-378)[2084], 4 février 1986, page 74 E
378; & JP-A-60 186 130**

**PATENT ABSTRACTS OF JAPAN, vol. 11, no.
117 (E-498)[2564], 11 avril 1987; (document
cité pour montrer la date de publication de
la demande japonaise); & JP-A-61 264 925**

(73) Titulaire: **ALCATEL CIT**
**12 Rue de la Baume**
**F-75008 Paris(FR)**

(72) Inventeur: **Surie, Serge**
**60 rue Bronzac**
**F-94240 L'Hay les Roses(FR)**

(74) Mandataire: **Weinmiller, Jürgen et al**
**Lennéstrasse 9 Postfach 24**
**W-8133 Feldafing(DE)**

## Description

La présente invention est du domaine des transmissions de données et concerne plus particulièrement l'égalisation des câbles de transmission pour compenser les distorsions linéaires qu'ils font subir au signal numérique transmis et qui sont à l'origine d'atténuations et d'interférences entre éléments de signaux gênant sa reconnaissance.

L'égalisation consiste en un filtrage linéaire du signal transmis pour obtenir de la voie de transmission une réponse globale plate en amplitude et linéaire en phase alors qu'elle emprunte des câbles de transmission dont l'affaiblissement est proportionnel à la longueur du câble et à la racine carrée de la fréquence du signe transmis, avec des coefficients de proportionnalité variables selon la constitution des câbles.

L'égalisation est automatique lorsque le filtre linéaire utilisé pour l'égalisation est pourvu d'éléments variables dont le réglage est asservi à des modifications de caractéristique du signal transmis afin d'adapter sa caractéristique de transfert de gain à celle de l'affaiblissement réel de la section de câble utilisée, cette adaptation étant, en régle générale, une adaptation de longueur c'est-à-dire une prise en compte des variations de la caractéristique d'affaiblissement d'un câble assimilables à celles provoquées par des variations de longueur.

La plupart des égaliseurs automatiques connus utilisés dans les transmissions de données en bande de base sont ajustés à l'aide d'un détecteur d'amplitude crête constituant une commande automatique de gain. Des exemples en sont décrits dans les brevets français 1.603.582 et 2.128.152. Prévus pour des câbles coaxiaux à structure invariable sur toute leur longueur, ils ont des performances très amoindries lorsqu'ils sont utilisés dans le réseau d'abonnés où une liaison peut être formée de plusieurs tronçons successifs de paires de diamètres différents.

Pour tenter de résoudre ce problème, on a déjà songé à utiliser un critère plus représentatif des variations de la caractéristique d'affaiblissement d'un câble en fonction de la fréquence qui est basé sur la régularité des passages par zéro du signal numérique transmis et mis en oeuvre ainsi qu'il est décrit dans le brevet français 2 419 618, à l'aide d'un autocorrélateur à coïncidence de signes opérant sur deux versions retardées entre elles du signal numérique transmis et égalisé. Ce nouveau critère améliore notablement la qualité de l'égalisation mais présente l'inconvénient de nécessiter, dans sa forme de mise en oeuvre préférentielle, un filtre de prédistorsion placé en entrée de l'autocorrélateur à coïncidence de signes qui limite la plage d'auto-adaptation de l'égaliseur automatique.

La présente invention a pour but un égaliseur automatique pour transmission numérique synchrone ayant de grandes capacités d'autoadaptation et utilisable dans le réseau d'abonnés.

Elle a pour objet un égaliseur automatique pour transmission numérique synchrone comportant un circuit de commande automatique de gain tendant à maintenir l'amplitude crête de son signal de sortie constante, un réseau variable d'égalisation pourvu d'une commande permettant de modifier la pente de sa caractéristique de transfert de gain sans modifier la valeur du gain à demi-fréquence Baud du signal de transmission numérique synchrone et des moyens de détection de l'erreur moyenne de phase, par rapport aux milieux des intervalles Baud, des passages par zéro des traînes d'impulsions apparaissant dans le signal de transmission numérique synchrone reçu, moyens de détection qui contrôlent la commande du réseau variable d'égalisation de manière à augmenter la pente de la caractéristique de transfert de gain de ce réseau en cas de détection d'un retard de phase et à diminuer cette pente dans le cas inverse.

Le réseau variable d'égalisation est avantageusement constitué d'une cellule de filtrage en demi T comportant dans la branche en série entre son entrée et sa sortie une résistance variable, et dans la branche en parallèle sur sa sortie un circuit oscillant parallèle accordé dans le haut de la bande occupée par le signal de transmission numérique synchrone, entre la demi-fréquence Baud et la fréquence Baud de ce dernier.

Les moyens de détection d'erreur moyenne de phase comportent avantageusement des moyens de sélection des intervalles Baud du signal de transmission numérique reçu qui sont vides d'impulsion tout en étant immédiatement précédés par des intervalles Baud occupés par des impulsions et des moyens d'échantillonnage opérant sur le signal numérique transmis égalisé au milieu des dits intervalles Baud vides d'impulsion.

D'autres caractéristiques et avantages de l'invention ressortiront de la description ci-après d'un mode de réalisation donné à titre d'exemple. Cette description sera faite en regard du dessin dans lequel :

- la figure 1 représente le schéma d'un égaliseur automatique selon l'invention adapté à un signal de transmission numérique codé en bipolaire,
- la figure 2 détaille un réseau variable d'égalisation et un filtre variable de complément de longueur de câble figurant dans le schéma d'égaliseur automatique représenté à la figure 1,

- la figure 3 illustre différentes formes de caractéristique de transfert de gain qu'il est possible d'obtenir à l'aide du réseau d'égalisation variable et du filtre variable de complément de longueur de câble de la figure 2,
- la figure 4 est un diagramme de l'oeil d'un signal de transmission numérique codé en bipolaire avec des exemples de distorsions et
- la figure 5 représente des chronogrammes des signaux internes d'un circuit de détection d'erreur moyenne de phase figurant dans le schéma d'égaliseur représenté à la figure 1.

L'égaliseur automatique que l'on va décrire est destiné à égaliser une ligne du réseau d'abonnés pour un signal de transmission numérique synchrone, en bande de base, codé en bipolaire, avec une mise en forme en cosinus surélevé occupant une bande de fréquence limitée supérieurement à la fréquence Baud avec le principal de ses composantes situé dans une plage inférieure à la demi-fréquence Baud.

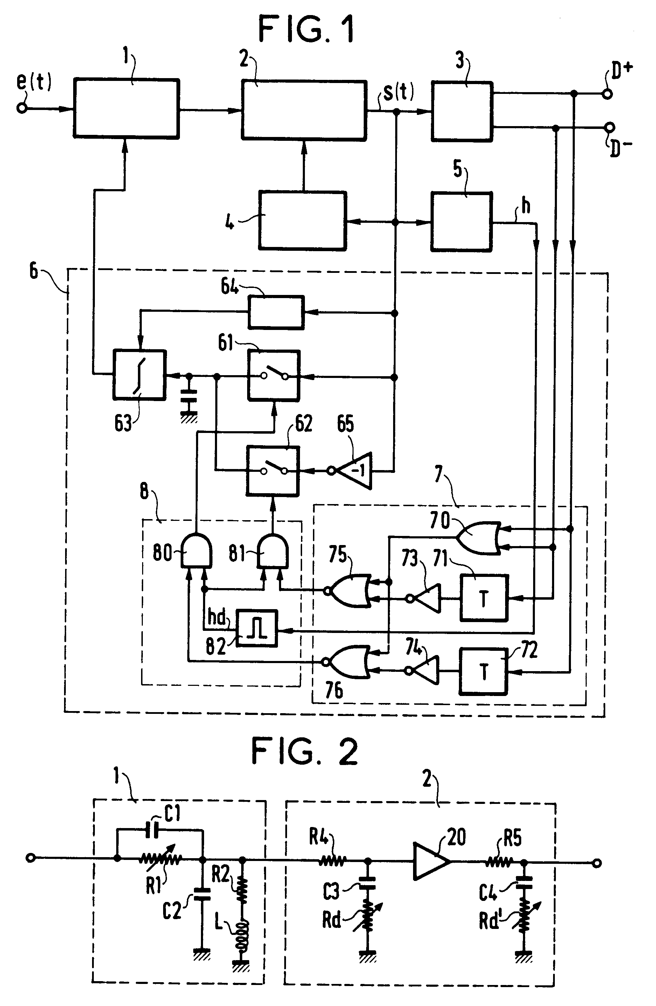

Il comporte, comme représenté à la figure 1, un circuit de filtrage du signal numérique reçu, en deux parties successives : un réseau variable d'égalisation 1 et un filtre variable de complément de longueur 2, qui est contrôlé par deux boucles d'asservissement distinctes, l'une de contrôle automatique de gain agissant sur le réglage du filtre variable de complément de longueur 2 et l'autre de mise en forme de spectre agissant sur le réglage du réseau variable d'égalisation 1 sans influencer celui du filtre variable de complément de longueur 2.

Le réseau variable d'égalisation 1 permet de modifier le rapport des amplitudes des composantes de fréquences basse et haute du signal numérique reçu e(t) dans la plage inférieure à la demi-fréquene Baud où se situe le principal des ses composantes. Il est conçu de manière à avoir un réglage qui ne joue pas ou très faiblement sur l'amplitude du signal qui le traverse, c'est-à-dire en fait sur la composante du signal à la demi-fréquence Baud, pour ne pas influencer le réglage du filtre variable de complément de longueur 2 et éviter des phénomènes de battement dus à des accrochages entre les deux boucles d'asservissement. Il réalise en quelque sorte l'égalisation d'une famille de lignes types de longueur maximale qui apportent toutes le même affaiblissement à l'amplitude crête du signal numérique transmis.

Il comporte, comme représenté à la figure 2, une cellule de filtrage en demi T ayant principalement dans la branche en série entre son entrée et sa sortie une résistance variable R1 et dans la branche en parallèle sur sa sortie un circuit bouchon formé d'une inductance L et d'une capacité C2 en parallèle, accordées à une fréquence comprise entre la demi-fréquence Baud et la fréquence Baud. Le gain complexe de transfert de cette cellule c'est-à-dire le rapport de sa tension de sortie Vs sur sa tension d'entrée Ve, s'exprime par la relation :

$$\frac{Vs}{Ve} = \frac{\dfrac{1}{R1}}{\dfrac{1}{R1} + C2p + \dfrac{1}{Lp}} = \frac{p}{R1C2p^2 + p + \dfrac{R1}{L}}$$

et le module de ce gain complexe pour p égal à j$\omega$, $\omega$ représentant la pulsation, a pour expression :

$$\frac{\omega}{\sqrt{(\frac{R1}{L} - R1C2\,\omega^2)^2 + \omega^2}}$$

La caractéristique de transfert de gain de cette cellule, qui représente les variations en fonction de la fréquence de :

$$20\log \frac{\omega}{\sqrt{(\frac{R1}{L} - R1C2\,\omega^2)^2 + \omega^2}}$$

c'est-à-dire d'une grandeur proportionnelle au logarithme de ce module du gain complexe, passe par un maximum égal à O dB quelle que soit la valeur de la résistance R1 pour la fréquence de résonance :

$$f0 = \frac{\omega 0}{2\pi} = \frac{1}{2\pi} \frac{1}{\sqrt{LC2}} ,$$

a une pente positive et fonction croissante de R1 pour les fréquences inférieures à fO et une pente négative et fonction décroissante de R1 pour les fréquences supérieures à fO.

Etant donnée la situation de la fréquence d'accord par rapport à la fréquence Baud, la partie utile de cette caractéristique de transfert de gain se réduit pratiquement à la partie gauche de la courbe dont le sommet situé dans le haut de la bande utile, au voisinage de la demi-fréquence Baud, est peu modifié par un changement de valeur de la résistance R1 et dont la pente positive dans la plage inférieure à la demi-fréquence Baud varie dans cette plage avec la valeur de la résistance R1 dans le même sens qu'elle, et approxime une variation proportionnelle à la racine carrée de la fréquence.

La demi-cellule en T du réseau d'égalisation variable 1 peut être complétée, comme représenté, par une résistance R2 intercalée en série avec l'inductance L pour limiter inférieurement la largeur de bande relative de la cellule et par une capacité C1 placée en parallèle sur tout ou partie de la résistance variable R1 pour déformer de façon asymétrique la caractéristique de transfert de gain et déplacer son sommet vers les fréquences hautes afin d'obtenir dans la bande utile une meilleure approximation d'une variation proportionnelle à la racine carrée de la fréquence du gain exprimé en décibels.

Les valeurs exactes des différents éléments de la cellule en demi T du réseau d'égalisation variable 1 dépendent des conditions d'utilisation. Elles sont déterminées en mettant en application les techniques bien connues de synthèse de filtre à partir d'une famille de courbes modèles de gain de transfert de lignes types de longueur maximale.

Le filtre de complément de longueur 2 a pour fonction de ramener, du point de vue électrique, la ligne effectivement utilisée à la longueur maximale pour laquelle la famille de courbes modèles a été établie. En pratique, il ramène l'amplitude crête du signal numérique reçu à une valeur constante indépendante de la longueur de la ligne effectivement utilisée dans des conditions similaires du point de vue électrique à ce que l'on obtiendrait avec une longueur maximale de ligne. Il se comporte comme une ligne de longueur réglable avec un gain de transfert exprimé en décibels variant approximativement proportionnellement à l'inverse de la racine carrée de la fréquence.

Il peut être réalisé, comme représenté à la figure 2, au moyen de deux cellules successives en demi T qui sont séparées par un amplificateur séparateur 20 et qui agissent chacune dans une partie de la bande des fréquences occupée par le signal numérique. Chacune de ces cellules comporte une résistance R4, R5 dans la branche en série entre son entrée et sa sortie et une capacité C3, C4 connectée en série avec une résistance variable Rd, Rd' dans la branche en parallèle sur sa sortie. Leurs gains complexes, c'est-à-dire les rapports de leur tension de sortie Vs à leur tension d'entrée Ve, sont de même forme et s'expriment pour l'une d'entre elles par la relation :

$$\frac{Vs}{Ve} = \frac{1 + RdC3p}{1 + (Rd+R4) C3p}$$

qui montre qu'elles se comportent en filtre-passe bas avec une valeur de gain tendant pour les fréquences élevées vers le rapport

$$\frac{Rd}{Rd + R4}$$

4

Ce rapport est ajustable au moyen de la résistance variable Rd et peut être amené au voisinage de la valeur 1 lorsque la valeur de la résistance Rd devient très supérieure à celle de la résistance R4 transformant alors, le pôle - 1/(Rd + R4) C3 et le zéro -1/RdC3 tendant en ce cas à se confondre, la réponse d'une cellule en une réponse de filtre passe-tout pour le cas d'égalisation d'une ligne de longueur maximale.

Le passage de la fonction de filtre passe-tout à celle de filtre passe-bas s'opère par éloignement l'un de l'autre du pôle -1/(Rd + R4)C3 et du zéro -1/RdC3. Comme les déplacements du pôle et du zéro autorisés par les valeurs utilisables en pratique pour les résistances et capacités ne permettent pas commodément d'éloigner suffisamment ce pôle et ce zéro dans le cas d'une ligne courte pour couvrir toute la plage des fréquences utiles d'un seul tenant, celle-ci est couverte à l'aide des deux cellules successives, la première opérant dans la partie basse de la bande utile et la deuxième dans la partie haute.

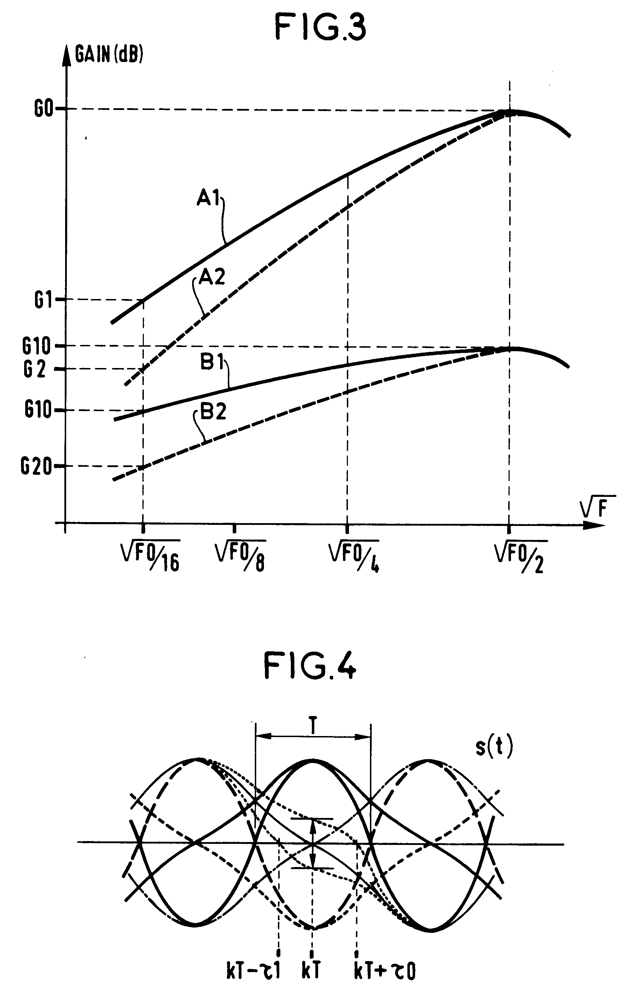

Le comportement de l'ensemble du réseau variable d'égalisation 1 et du filtre variable de complément de longueur 2 en fonction des valeurs de réglage de la résistance R1 et des résistances Rd et Rd' est illustré dans la figure 3 par les familles de courbes A ou B qui représentent chacune les variations de la forme de la caractéristique de transfert de gain en fonction de la fréquence qu'il est possible d'obtenir pour une valeur fixe des résistances Rd et Rd', et différentes valeurs de la résistance R1. Pour chaque famille cette caractéristique reste sensiblement linéaire en fonction de la racine carrée de la fréquence dans la bande limitée supérieurement par la demi-fréquence Baud Fo/2 et passe par un point fixe correspondant au gain G0, G10 à la demi-fréquence Baud Fo/2.

Une variation des valeurs des résistances Rd, Rd' alors que la valeur de la résistance R1 reste fixe permet de passer d'une famille à une autre, de A1 à B1 ou A2 à B2, avec une variation du gain à la demi-fréquence Baud Fo/2 et par conséquent une variation de l'affaiblissement de l'amplitude crête du signal numérique.

Les valeurs des résistances variables Rd, Rd' qui permettent de faire varier le gain à la demi-fréquence Baud sont contrôlées par la boucle d'asservissement assurant le contrôle automatique de gain. Celle-ci est constituée d'un détecteur de crête 4 (figure 1) qui est connecté en sortie du filtre de complément de longueur 2 et qui fait varier les valeurs des résistances Rd et Rd' en sens inverse de l'amplitude crête détectée.

Le filtre de complément de longueur 2 et le détecteur de crête 4 sont habituellement réalisés à l'aide d'un circuit intégré spécialisé connu sous le sigle ALBO (Automatic Line Build Out) tel que par exemple le circuit référencé TCM 2203 par la société Texas Instrument qui renferme les résistances variables Rd, Rd', leur circuit de contrôle à détecteur de crête 4, l'amplificateur 20 intercalé entre les deux cellules du filtre de complément de longueur 2 ainsi qu'un circuit de récupération de rythme 5 et un décodeur bipolaire-binaire 3 placés à la suite et utilisés dans la deuxième boucle d'asservissement réglant la valeur de la résistance R1 pour la mise en forme du spectre des fréquences.

Le circuit de récupération de rythme 5 peut être un oscillateur oscillant à la fréquence Baud synchronisé par les impulsions du signal bipolaire s(t) disponibles en sortie du filtre de complément de longueur 2.

Le décodeur bipolaire-binaire 3 qui sépare les impulsions positives et négatives du signal bipolaire s(t) en deux suites d'impulsions binaires $D^+$, $D^-$ adaptées à des circuits de traitement en logique binaire peut être constitué de deux comparateurs à seuil, l'un avec un seuil ajusté à mi-niveau des impulsions positives se déclenchant lorsque son seuil est dépassé et l'autre avec un seuil ajusté à mi-niveau des impulsions négatives se déclenchant en absence de dépassement de son seuil.

La deuxième boucle d'asservissement assurant la mise en forme du spectre des fréquences du signal reçu en jouant sur la valeur de la résistance R1 du réseau variable d'égalisation 1 tend à faire en sorte que les traînes des impulsions apparaissant dans le signal bipolaire reçu et égalisé passent à zéro au milieu des intervalles Baud, ce qui est la condition sur toutes les impulsions du signal reçu, considérées isolément, pour qu'elles n'interférent pas entre elles en milieu d'intervalle Baud et donc pour que le signal soit égalisé.

Comme le montre le diagramme de l'oeil de la figure 4, un signal bipolaire reçu et égalisé passe normalement par zéro au milieu, noté kT d'un intervalle Baud vide d'impulsion suivant un intervalle baud occupé par une impulsion, l'intervalle Baud vide d'impulsion étant alors occupé par la traîne de l'impulsion de l'intervalle Baud qui le précède, mais il peut également passer par zéro en avance, avance notée $\tau 1$, par rapport à ce milieu lorsqu'il présente un excès de composantes hautes fréquences ou en retard, retard noté $\tau o$, lorsqu'il présente un excès de composantes basses fréquences comme cela a été représenté par des lignes pointillées pour une impulsion positive occupant l'intervalle Baud précédant celui vide d'impulsion.

La deuxième boucle d'asservisement est formée d'un détecteur d'erreur moyenne de phase 6 (figure 1) des passages par zéro des traînes d'impulsions qui provoque soit une augmentation de la valeur de la résistance R1 du réseau variable d'égalisation 1 et donc de la pente de la courbe de transfert de gain de ce réseau lorsque l'erreur moyenne détectée est un retard de phase du à un excès de composantes basses fréquences par rapport aux composantes hautes fréquences soit une diminution de la valeur de la résistance R1 dans le cas inverse.

Ce circuit de détection d'erreur moyenne de phase 6 procède par échantillonnage du signal bipolaire s-(t) en milieu des intervalles Baud occupés par une traîne d'impulsion en inversant au préalable ou non le signal bipolaire s(t) en fonction de la polarité des impulsions de manière à avoir, dans les deux cas d'impulsions positives et négatives, une même polarité d'échantillon pour une erreur de phase de même signe. Il comporte un circuit de sélection 7 repérant les intervalles Baud occupés par une traîne d'impulsion, un circuit de création d'impulsions d'échantillonage 8 en milieu des intervalles Baud repérés contrôlé à la fois par le circuit de récupération de rythme 5 et par le circuit de sélection 7, deux circuits d'échantillonnage 61, 62 commandés par le circuit de création d'impulsions d'échantillonnage 8 l'un opérant sur le signal bipolaire s(t) et l'autre sur une version inversée du signal s(t), et un circuit de sommation et d'intégration 63 opérant sur les échantillons délivrés par les circuits d'échantillonnage 61, 62 et commandant un dispositif de contrôle de la valeur de la résistance R1 du réseau d'égalisation variable qui peut être une diode électroluminescente d'un photocoupleur à résistance variable en fonction de l'éclairement.

Le circuit de sélection 7 comporte en entrée, une porte logique de type "ou" 70 à deux entrées connectées aux sorties $D^+$, $D^-$ du décodeur 3 et deux circuits à retard 71, 72 dont le retard est d'un intervalle Baud T, qui sont connectés en entrée aux sorties $D^-$, $D^+$ du décodeur 3 respectivement et qui sont suivis chacun d'un inverseur 73, 74, et, en sortie deux portes logiques de type "non ou" 75, 76 à deux entrées ayant chacune une entrée connectée à la sortie de la porte logique de type "ou" 70 et l'autre entrée connectée soit à la sortie de l'inverseur 73 soit à la sortie de l'inverseur 74 selon la porte 75 ou 76 considérée.

La porte logique de type "ou" 70 délivre en sortie une suite d'impulsions $D^+(Tn) + D^-(Tn)$, Tn étant l'intervalle Baud en cours, résultant de la réunion des impulsions disponibles sur les sorties $D^+$ et $D^-$ du décodeur 3. Elle permet de sélectionner dans le signal bipolaire s(t) les temps Baud vides d'impulsion.

Le circuit à retard 71 délivre la suite d'impulsions $D^-(Tn-1)$ qui permet de repérer les intervalles Baud qui précédent immédiatement l'intervalle Baud en cours et qui sont occupés dans le signal bipolaire s(t) par une impulsion négative.

Le circuit à retard 72 délivre la suite d'impulsions $D^+(Tn-1)$ qui permet de repérer les intervalles Baud qui précédent immédiatement l'intervalle Baud en cours et qui sont occupés dans le signal bipolaire s(t) par une impulsion positive.

La porte logique de type "non ou" 75 délivre le signal logique $D^-(Tn-1) . \overline{D^+(Tn) + D^-(Tn)}$ qui est une sélection des impulsions négatives du signal bipolaire s(t) qui précédent immédiatement un intervalle Baud en cours vide d'impulsion.

La porte logique de type "non ou" 76 délivre le signal logique $D^+(Tn-1) . \overline{D^+(Tn) + D^-(Tn)}$ qui est une sélection des impulsions positives du signal bipolaire s(t) qui précédent immédiatement un intervalle Baud en cours vide d'impulsion.

Le circuit de création d'impulsions d'échantillonnage 8 comporte deux portes logiques de type "et" 80, 81 à deux entrées ayant chacune une entrée connectée à la sortie d'un monostable 82 et l'autre entrée connectée, en sortie du circuit de sélection 7, soit à la sortie de la porte logique de type "non ou" 75 soit à celle de la porte logique de type "non ou" 76 selon la porte 81 ou 80 considérée.

Le monostable 82 déclenché par les transitions du signal du circuit de récupération de rythme 5 apparaissant en milieu d'intervalle Baud engendre une impulsion calibrée d'échantillonnage au milieu de chaque intervalle Baud, suffisamment étroite pour être toujours recouverte par les impulsions $D^+$, $D^-$ engendrées par le décodeur 3.

Les portes logiques de type "et" 80, 81 qui reçoivent une impulsion d'échantillonnage au milieu de chaque intervalle Baud ne la laisse passer que lorsqu'elles reçoivent en même temps une impulsion $D^+$ ou $D^-$ du circuit de sélection 7 c'est-à-dire lorsque l'intervalle Baud en cours est, pour le signal bipolaire s(t), un intervalle Baud vide d'impulsion suivant immédiatement un intervalle Baud occupé par une impulsion positive ou négative.

La sortie de la porte logique de type "et" 80 qui délivre une impulsion d'échantillonnage au milieu des intervalles Baud occupés par les traînes des impulsions positives contrôle le circuit d'échantillonnage 61. Celui-ci est connecté en entrée directement à la sortie du filtre variable de complément de longueur 2 et délivre des échantillons d'autant plus positifs ou négatifs que l'erreur de phase est un retard ou une avance important du passage par zéro des traînes d'impulsions par rapport au milieu de l'intervalle Baud.

La sortie de la porte logique de type "et" 81 qui délivre une impulsion d'échantillonnage au milieu des intervalles Baud occupés par les traînes des impulsions négatives contrôle le circuit d'échantillonnage 62. Celui-ci est connecté en entrée à la sortie du filtre de complément de longueur 2 par l'intermédiaire d'un inverseur 65 et délivre comme le précédent 61, des échantillons d'autant plus positifs ou négatifs que l'erreur de phase est un retard ou une avance important du passage par zéro des traînes d'impulsions par rapport au milieu de l'intervalle Baud.

Les sorties des deux circuits d'échantillonnage 61, 62 sont réunies à l'entrée d'un circuit intégrateur 63 qui délivre un signal représentatif de l'erreur moyenne de phase utilisé pour le contrôle de la valeur de la résistance R1 du réseau variable d'égalisation 1. Ce circuit intégrateur 63 est pourvu d'une commande d'inhibition contrôlée par un détecteur d'activité 64 qui est connecté à la sortie du filtre variable d'égalisation 2 et vérifie que le signal bipolaire a déjà une amplitude suffisante pour que le taux d'erreurs sur les sortes $D^+$ et $D^-$ soit fable avant d'autoriser le fonctionnement de la boucle d'asservissement de mise en forme du spectre.

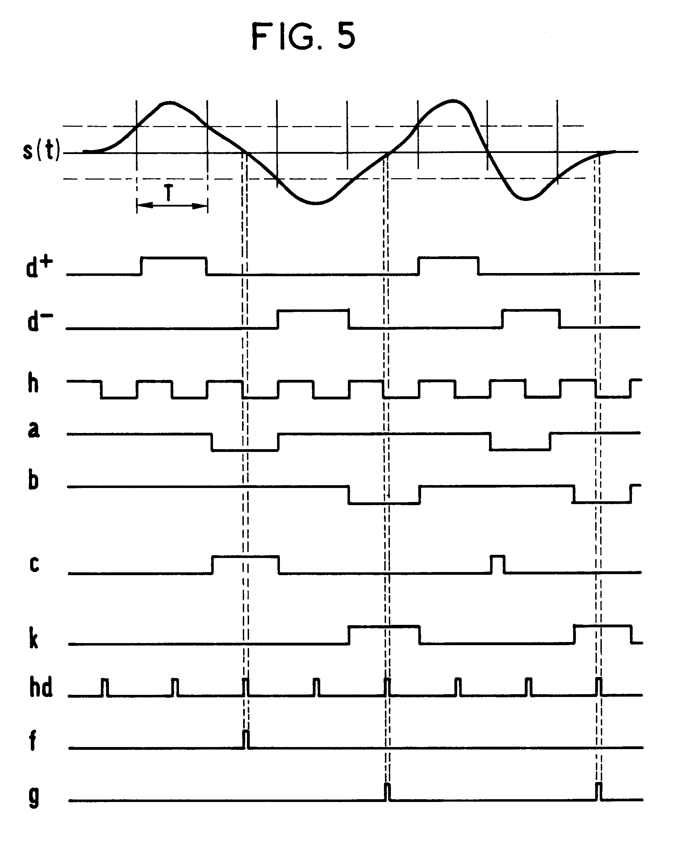

La figure 5 montre les chronogrammes des signaux en différents points du détecteur d'erreur moyenne de phase 6. La courbe s(t) représente un signal bipolaire égalisé issu du filtre variable de complément de longueur 2 qui code les valeurs binaires 1010 et dans lequel apparaissent des traînes d'impulsions passant par zéro après le milieu de l'intervalle Baud suivant, avec un certain retard de phase montrant un excès des composantes basses fréquences par rapport aux comosantes hautes fréquences. Les courbes $d^+$ et $d^-$ sont les suites d'impulsions binaires correspondantes disponibles en sorties $D^+$ et $D^-$ du décodeur bipolaire-binaire 3. La courbe h est le signal d'horloge à la fréquence Baud engendré par le circuit de récupération de rythme 5. la courbe a représente le signal en sortie de l'inverseur 74 qui est le signal représenté en $d^+$ retardé d'un intervalle Baud et complémenté. La courbe b représente le signal en sortie de l'inverseur 73 qui est le signal représenté en $d^-$ retardé d'un intervalle Baud et complémenté. La courbe c est le signal de sortie de la porte logique de type "non ou" 76 qui n'est autre qu'une sélection des impulsions disponibles à la sortie $D^+$ du décodeur bipolaire-binaire 3 losqu'elles sont suivies d'un intervalle Baud vide d'impulsion. La courbe k est le signal de sortie de la porte logique de type "non ou" 75 qui n'est autre qu'une sélection des impulsions disponibles à la sortie $D^-$ du décodeur bipolaire-binaire 3 lorsqu'elles sont suivies d'un intervalle Baud vide d'impulsion. Des impulsions parasites peuvent apparaître dans les courbes c et k en raison des variations de largeur des impulsions en sortie $D^+$ et $D^-$ du décodeur bipolaire-binaire 3 mais elles sont sans effet car éloignées de la zone médiane des intervalles Baud. La courbe hd représente la suite d'impulsions d'échantillonnage en milieu d'intervalle Baud disponibles en sortie du monostable 82. La courbe f représente les impulsions d'échantillonnage sélectionnées en sortie de la porte logique de type "et" 80 qui apparaissent à chaque intervalle Baud en cours à la fois vide d'impulsion et immédiatement précédé d'un intervalle Baud occupé par une impulsion positive. La courbe g représente les impulsions d'échantillonnage sélectionnées en sortie de la porte logique de type "et" 81 qui apparaissent à chaque intervalle Baud en cours à la fois vide d'impulsion et immédiatement précédé d'un intervalle Baud occupé par une impulsion négative.

D'autres modes de réalisation du circuit de détection d'erreur moyenne de phase 6 peuvent être envisagés. Les délais d'un intervalle Baud des circuits à retard 71, 72 ne sont pas critiques et peuvent être portés à un intervalle Baud et demi ce qui permet de les réaliser à partir de registres à décalage à deux étages cadencés par les fronts de l'horloge de rythme coïncidant avec les milieux des intervalles Baud. Comme le signal bipolaire est un signal brouillé afin de permettre une récupération de rythme sans problème on peut éventuellement supprimer l'un des circuits d'échantillonnage et la chaîne des éléments qui le commande. Cela revient à ne faire fonctionner la boucle d'asservissement assurant la mise en forme du spectre des fréquences qu'à partir des traînes des impulsions uniquement positives ou négatives. Les performances sont moindres mais restent acceptables.

**Revendications**

1. Egaliseur automatique pour transmission numérique synchrone comportant un circuit de commande automatique de gain (2, 4) tendant à maintenir l'amplitude de crête du signal de transmission numérique égalisé constante, caractérisé en ce qu'il comporte en outre un réseau variable d'égalisation (1) pourvu d'une commande permettant de modifier la pente de sa caractéristique de transfert de gain dans le domaine des fréquences occupées par le signal de transmission numérique sans modifier la valeur du gain à demi-fréquence Baud de ce signal de transmission numérique et des moyens de détection (6) de l'erreur moyenne de phase, par rapport aux milieux des intervalles Baud du signal de transmission numérique, des passages par zéro des traînes d'impulsions apparaissant dans le signal

EP 0 285 954 B1

numérique synchrone reçu et égalisé, moyens de détection (6) qui contrôlent la commande du réseau variable d'égalisation (1) de manière à augmenter la pente de la caractéristique de transfert de gain de ce dernier (1) en cas de détection d'un retard de phase et à diminuer cette pente dans le cas inverse.

2. Egaliseur selon la revendication 1, caractérisé en ce que le réseau variable d'égalisation (1) est constitué d'une cellule de filtrage en demi T comportant dans la branche en série entre son entrée et sa sortie une résistance variable (R1) et dans la branche en parallèle sur sa sortie un circuit oscillant formé d'une inductance (L) et d'une capacité (C2) parallèles accordées à une fréquence comprise entre la fréquence Baud et la demi-fréquence Baud du signal de transmission numérique.

3. Egaliseur selon la revendication 2, caractérisé en ce que la cellule de filtrage en T du réseau variable d'égalisation comporte en outre dans sa branche série une capacité (C1) en parallèle sur tout ou partie de la résistance variable (R1).

4. Egaliseur selon la revendication 2, caractérisé en ce que la cellule de filtrage en T du réseau variable d'égalisation comporte en outre dans sa branche parallèle une résistance (R2) intercalée en série avec l'inductance (L).

5. Egaliseur selon la revendication 1, caractérisé en ce que les moyens de détection (6) de l'erreur moyenne de phase comportent des moyens de sélection (7) des intervalles Baud du signal de transmission numérique reçu qui sont vides d'impulsion tout en étant immédiatement précédés par des intervalles Baud occupés par des impulsions, des moyens d'échantillonnage (61, 62) opérant sur ledit signal de transmission numérique au milieu desdits intervalles Baud vides d'impulsion et des moyens d'intégration (63) effectuant la moyenne des valeurs des échantillons délivrés par les moyens d'échantillonnage (61, 62) et contrôlant la commande du réseau variable d'égalisation (1).

6. Egaliseur selon la revendication 5 prévu pour un signal de transmission numérique bipolaire, caractérisé en ce que les moyens de sélection (7) sélectionnent les intervalles Baud du signal de transmission numérique reçu qui sont vides d'impulsion tout en étant immédiatement précédes par des intervalles Baud occupés par des impulsions d'une même polarité soit positive soit négative.

7. Egaliseur selon la revendication 5, prévu pour un signal de transmission numérique bipolaire, caractérisé en ce que les moyens de sélection (7) séparent les intervalles Baud du signal de transmission numérique reçu qui sont vides d'impulsion tout en étant immédiatement précédés par des intervalles Baud occupés par des impulsions, en fonction des polarités de ces dernières et en ce que les moyens d'échantillonnage (61, 62) comportent deux circuits d'échantillonnage (61, 62) opérant sous le contrôle des moyens de sélection (7), l'un (61) sur le signal de transmission numérique reçu et égalisé au milieu des intervalles Baud vides d'impulsion immédiatement précédés par des intervalles Baud occupés par une impulsion d'une première polarité soit positive, soit négative l'autre (62) opérant sur une version inversée du signal de transmission numérique reçu et égalisé au milieu des intervalles Baud vides d'impulsion immédiatement précédés par des intervalles Baud occupés par une impulsion d'une deuxième polarité soit négative, soit positive.

8. Egaliseur selon le revendication 1, caractérisé en ce que les moyens de détection (6) de l'erreur moyenne de phase sont pourvus d'une commande d'inhibition contrôlée par un détecteur d'activité (64) opérant à partir du signal de transmission numérique égalisé.

**Claims**

1. An automatic equalizer for synchronous digital transmission, the equalizer comprising an automatic gain control circuit (2, 4) tending to maintain the peak amplitude of the equalized digital transmission signal constant, the equalizer being characterized in that it further comprises a variable equalization network (1) provided with a control input enabling the slope of its gain transfer characteristic in the frequency range occupied by the digital transmission signal to be modified without modifying the value of the gain at the half Baud frequency of said digital transmission signal, and mean phase error detection means (6) for detecting the mean phase error in the zero crossings of the skirts of pulses appearing in the received and equalized synchronous digital signal relative to the middles of the Baud intervals in the

8

digital transmission signal, said detection means (6) controlling the variable equalization network (1) in such a manner as to increase the slope of its gain transfer characteristic on detecting a phase delay and to reduce said slope in the inverse case.

2. An equalizer according to claim 1, characterized in that the variable equalization network (1) is constituted by a half-T filter cell including a variable resistance (R1) in its series branch between its input and its output, and an oscillator circuit constituted by a parallel-connected inductance (L) and capacitance (C2) in its branch in parallel with its output, said oscillator circuit being tuned to a frequency lying between the Baud frequency and the half Baud frequency of the digital transmission signal.

3. An equalizer according to claim 2, characterized in that the T filter cell of the variable equalization network further includes a capacitance (C1) connected in parallel with all or a portion of its variable resistance (R1) in its series branch.

4. An equalizer according to claim 2, characterized in that the T filter cell of the variable equalization network further includes a resistance (R2) connected in series with its inductance (L) in its parallel branch.

5. An equalizer according to claim 1, characterized in that the mean phase error detection means (6) comprise selector means (7) for selecting those Baud intervals in the received digital transmission signal which are themselves empty of any pulse and which are immediately preceded by a Baud interval occupied by a pulse, sampling means (61, 62) operating on said digital transmission signal in the middles of said empty Baud intervals, and integrator means (63) for averaging the sample values delivered by the sampling means (61, 62) and for controlling the variable equalization network (1).

6. An equalizer according to claim 5, provided for a bipolar digital transmission signal, the equalizer being characterized in that the selection means (7) select Baud intervals in the received digital transmission signal which are empty of any pulse and which are immediately preceded by Baud intervals which are occupied by pulses of a single polarity which may be positive or negative.

7. An equalizer according to claim 5, provided for a bipolar digital transmission signal, the equalizer being characterized in that the selection means (7) separate the Baud intervals in the received digital transmission signal which are empty of any pulse and which are immediately preceded by Baud intervals occupied by pulses as a function of the polarities of the pulses occupying said preceding Baud intervals, and in that the sampling means (61, 62) include two sampling circuits (61, 62) operating under the control of the selection means (7), one of the sampling means (61) operating on the received and equalized digital transmission signal in the middles of empty Baud intervals which are immediately preceded by Baud intervals occupied by pulses of a first polarity which may be positive or negative, and the other one of the sampling means (62) operating or an inverted version of the received and equalized digital transmission signal in the middles of empty Baud intervals immediately preceded by Baud intervals occupied by pulses of a second polarity which is either negative or positive.

8. An equalizer according to claim 1, characterized in that the mean phase error detection means (6) are provided with an inhibit input under the control of an activity detector (64) operating on the basis of the equalized digital transmission signal.

**Patentansprüche**

1. Automatischer Entzerrer für synchrone digitale Übertragung, mit einem automatischen Verstärkungssteuerkreis (2, 4), der die Spitzenamplitude des entzerrten digitalen Übertragungssignals auf einen konstanten Wert steuert, dadurch gekennzeichnet, daß er weiter ein veränderliches Entzerrungsnetzwerk (1) mit einer Steuerung zum Modifizieren der Steigung seiner Verstärkungstransferkennlinie im Bereich der vom digitalen Übertragungssignal besetzten Frequenzen ohne Modifizierung des Verstärkungswertes bei der halben Baudfrequenz dieses digitalen Übertragungssignals sowie Mittel (6) zur Erfassung des mittleren Phasenfehlers relativ zur Mitte der Baudintervalle des digitalen Übertragungssignals aufweist, wobei Nulldurchgänge der Impulsfolgen im empfangenen und entzerrten, synchronen, digitalen Signal auftreten und die Erfassungsmittel (6) die Steuerung des veränderlichen Entzerrungsnetzwerks (1) derart steuern, daß die Steilheit der Verstärkungstransferkennlinie dieses Netzwerks (1) im Fall der Erfassung einer Phasenverzögerung vergrößert und im entgegengesetzten Fall verkleinert.

2. Entzerrer nach Anspruch 1, dadurch gekennzeichnet, daß das veränderliche Entzerrungsnetzwerk (1) aus einem halben T-Filterglied besteht, das im Serienzweig zwischen seinem Eingang und seinem Ausgang einen veränderlichen Widerstand (R1) und in seinem parallelen Zweig an seinem Ausgang einen Oszillatorkreis aufweist, der aus einer Induktivität (L) und einem dazu parallelgeschalteten Kondensator (C2) besteht und auf eine Frequenz abgestimmt ist, die zwischen der Baudfrequenz und der halben Baudfrequenz des digitalen Übertragungssignals liegt.

3. Entzerrer nach Anspruch 2, dadurch gekennzeichnet, daß das T-Filterglied des veränderlichen Entzerrernetzwerks weiter in seinem Serienzweig einen Kondensator (C1) aufweist, der dem veränderlichen Widerstand (R1) ganz oder teilweise parallelgeschaltet ist.

4. Entzerrer nach Anspruch 2, dadurch gekennzeichnet, daß das T-Filterglied des veränderlichen Entzerrernetzwerks weiter in seinem Parallelzweig einen Widerstand (R2) aufweist, der in Reihe mit der Induktivität (L) geschaltet ist.

5. Entzerrer nach Anspruch 1, dadurch gekennzeichnet, daß die Mittel (6) zur Erfassung des mittleren Phasenfehlers Mittel (7) zum Wählen derjenigen Baudintervalle des empfangenen, digitalen Übertragungssignals aufweisen, die keine Impulse enthalten, denen jedoch unmittelbar Baudintervalle vorausgehen, die mit Impulsen besetzt sind, wobei Abtastmittel (61, 62) das digitale Übertragungssignal in der Mitte der impulsfreien Baudintervalle abtasten und Integrationsmittel (63) den Mittelwert der von den Abtastmitteln (61, 62) gelieferten Abtastproben bilden sowie das veränderliche Entzerrungsnetzwerks (1) steuern.

6. Entzerrer nach Anspruch 5, der für ein bipolares digitales Übertragungssignal vorgesehen ist, dadurch gekennzeichnet, daß die Wahlmittel (7) diejenigen Baudsignale des empfangenen digitalen Übertragungssignals auswählen, die keine Impulse enthalten, denen jedoch Baudintervalle unmittelbar vorausgehen, die mit Impulsen der gleichen Polarität, positiv oder negativ, besetzt sind.

7. Entzerrer nach Anspruch 5, der für ein bipolares digitales Übertragungssignal vorgesehen ist, dadurch gekennzeichnet, daß die Wahlmittel (7) diejenigen Baudsignale des empfangenen digitalen Übertragungssignals abtrennen, die keine Impulse enthalten, denen jedoch Baudintervalle unmittelbar vorausgehen, die mit Impulsen besetzt sind, und zwar in Abhängigkeit von deren Polaritäten, und daß die Abtastmittel (61, 62) zwei Tastkreise (61, 62) aufweisen, die unter der Kontrolle der Wahlmittel (7) arbeiten und wovon einer (61) das empfangene und in der Mitte der impulsfreien Baudintervalle entzerrte digitale Übertragungssignal bearbeitet, dem ein mit einem Impuls einer ersten Polarität, positiv oder negativ, besetztes Baudintervall vorausgeht, während der andere (62) eine invertierte Version des empfangenen und in der Mitte der impulsfreien Baudintervalle entzerrten digitalen Übertragungssignals bearbeitet, dem ein mit einem Impuls einer zweiten Polarität, positiv oder negativ, besetztes Baudintervall vorausgeht.

8. Entzerrer nach Anspruch 1, dadurch gekennzeichnet, daß die Mittel (6) zur Erfassung des mittleren Phasenfehlers mit einem Sperrglied versehen sind, das durch einen Aktivitätsdetektor (64) gesteuert wird, der auf der Basis des entzerrten digitalen Übermittlungssignals arbeitet.

# FIG. 1

# FIG. 2

EP 0 285 954 B1

# FIG.3

# FIG.4

# FIG. 5